# EUROPÄISCHE PATENTSCHRIFT

(11) **EP 0 378 996 B1**
(45) Veröffentlichungstag und Bekanntmachung des Hinweises auf die Patenterteilung: **21.09.1994**
(21) Anmeldenummer: 90100118.0
(22) Anmeldetag: 04.01.1990
(51) Int. Cl.: F25B 35/04, F25B 17/08

(54) **Sorptionsbehälter für feste Sorptionsmittel**
Sorption container for solid sorbents
Conteneur de sorption pour sorbant solide

(30) Priorität: 20.01.1989 DE 3901558
(43) Veröffentlichungstag der Anmeldung: 25.07.1990
(73) Patentinhaber: ZEO-TECH Zeolith Technologie GmbH, D-85716 Unterschleissheim (DE)
(72) Erfinder: Maier-Laxhuber, Peter, Dr., D-8000 München 60 (DE); Kaubek, Fritz, D-8035 Gauting (DE)

(56) Entgegenhaltungen:
- EP-A- 0 025 986
- EP-A- 0 151 786
- EP-A- 0 298 369
- DE-A- 2 622 699
- DE-A- 3 604 909
- DE-A- 3 612 781
- DE-C- 636 013
- FR-A- 1 029 877
- US-A- 3 616 849
- US-A- 4 126 016
- US-A- 4 470 268

## Beschreibung

Die Erfindung betrifft einen Sorptionsbehälter für feste Sorptionsmittel, insbesondere Zeolithe. Derartige Sorptionsbehälter sind beispielsweise aus der DE-A- 2 622 699 und- in Form eines Wellrohres- aus der DE-A- 3 612 781 bekannt.

Unter Sorptionsmittel versteht man ganz allgemein Stoffe, die ein leichtflüchtigeres Arbeitsmittel sorbieren. Bei dieser Sorptionsreaktion wird Wärme frei; beim umgekehrten Vorgang der Desorption muß Wärme zugeführt werden. Ein bekanntes Sorptionsmittel ist beispielsweise Zeolith, das zusammen mit dem Arbeitsmittel Wasser ein vielseitig einsetzbares Stoffpaar bildet.

Zeolithe sind kristalline Alumo-Silikate, die sich durch mikroskopisch kleine Hohlräume auszeichnen, in welche die Wassermoleküle eingelagert werden können.

Aus der DE-OS 35 21 484.8 ist beispielsweise eine Vorrichtung bekannt, welche die Sorptionseigenschaften der Zeolithe zur Erzeugung und Speicherung von Kälte bzw. Wärme nutzt. Vorrichtungen dieser Art benötigen immer einen Sorptionsbehälter, in den das Sorptionsmittel eingefüllt ist. Die Zu- bzw. Abfuhr der Reaktionswärme erfolgt über geeignete Wärmetauscherflächen der Sorptionsbehälter. Der durch Wärmezufuhr aus dem Sorptionsmittel desorbierte Wasserdampf muß über geeignete Strömungskanäle aus dem Sorptionsbehälter abgeleitet werden. Bei Umkehrung der Reaktion wird Wärme aus dem Sorptionsbehälter abgeführt. Kalter Wasserdampf, der in den Sorptionsbehälter zurückströmt, wird vom Sorptionsmittel wieder sorbiert.

An einen Sorptionsbehälter für feste Sorptionsmittel werden mehrere Anforderungen gleichzeitig gestellt. Zum einen sollte er ein idealer Wärmetauscher zur Zu- bzw. Abfuhr der Reaktionswärme sein, zum anderen muß er das eingeschlossene Sorptionsmittel gegen die äußere Atmosphäre sicher einschließen und gleichzeitig für das Zu- bzw. Abströmen der Arbeitsmitteldämpfe optimale Strömungsbedingungen aufweisen. Darüber hinaus muß er kostengünstig herstellbar und speziell für transportable Anlagen auch in Leichtbauweise ausführbar sein.

Aufgabe der vorliegenden Erfindung ist die Schaffung eines effektiven Sorptionsbehälters für ein festes Sorptionsmittel, der kostengünstig herstellbar ist, sich durch eine gewichtsparende und vakuumfeste Bauweise auszeichnet und einen guten Wärmekontakt zum eingefüllten Sorptionsmittel erlaubt.

Gelöst wird diese Aufgabe bei einem Sorptionsbehälter für ein festes Sorptionsmittel gemäß dem kennzeichnenden Teil des Patentanspruchs 1.

Die Unteransprüche geben vorteilhafte Ausgestaltungen und Weiterbildungen des Erfindungsgedankens wieder.

Metall-Wellschläuche im Sinne dieser Erfindung sind beispielsweise aus dem Taschenbuch Nr. 301, Ausgabe 1984, der Fa. Witzenmann GmbH Metallschlauch-Fabrik Pforzheim bekannt. Das Ausgangsmaterial für Wellschläuche sind demnach entweder nahtlose oder längsgeschweißte, relativ dünnwandige Rohre, in welche lyraförmige Wellen mittels Spezialwerkzeuge mechanisch oder auf hydraulischem Wege eingedrückt werden, oder dünnwandige Bänder, die im kontinuierlichen Verfahren wellförmig profiliert, auf den Schlauchdurchmesser gewickelt und mit den sich berührenden oder überlappenden Bandkanten miteinander verschweißt werden. Durch das Konstruktionsprinzip der aneinandergereihten, federnden Wellen wird sowohl eine hohe Beweglichkeit als auch eine überdurchschnittliche Druckfestigkeit erreicht.

Bei Metall-Wellschläuchen unterscheidet man weiterhin zwischen Wendel- und Ringwellung. Bei der Wendelwellung läuft eine meist rechtsgängige Wendel mit gleichbleibender Steigung über die ganze Schlauchlänge. Die Ringwellung weist dagegen eine Vielzahl in sich geschlossener Wellen gleichen Abstandes auf, deren Hauptebene senkrecht zur Schlauchachse steht.

Metall-Wellschläuche haben den Vorteil einer absoluten Dichtheit, einer großen Druckfestigkeit und eines geringen Platzbedarfes. Gängige Fertigungsgrößen für Metall-Wellschläuche liegen zwischen 3 und 350 mm lichter Weite. Die zulässigen Betriebsdrücke reichen bis zu 500 bar. In Edelstahlausführung ist je nach Druckbeanspruchung eine Temperaturbeständigkeit bis ca. 650°C gewährleistet.

Erfindungsgemäß werden die Wellen des Metall-Wellschlauches im Innern mit Sorptionsmittel gefüllt. Zusätzlich zu den bereits geschilderten Vorteilen eines Metall-Wellschlauches ist damit eine optimale Wärmeübertragung vom und zum Sorptionsmittel möglich. Je nach Wahl der Wellschlauchdurchmesser bzw. Wellenabstände läßt sich der Sorptionsbehälter dem jeweils eingesetzte Wärmeträgermedium anpassen.

Aufgrund der hohen Flexibilität des Metall-Wellschlauches ist ein guter Wärmekontakt zum Sorptionsstoff gewährleistet. Insbesondere bei Anlagen unter Unterdruck werden die Wellenflanken durch den äußeren Überdruck auf das Sorptionsmittel gepreßt. Bei Verwendung eines Wendelwellschlauches kann ein Wärmeträgermedium, das quer zum Metallschlauch geleitet wird noch stärker verwirbelt werden, als dies beim Ringwellschlauch ohnehin der Fall ist.

In der Sorptionsmittelfüllung kann vorteilhafterweise ein Strömungskanal für den Arbeitsmitteldampf vorgesehen werden, um das Arbeitsmittel ohne Druckabfall an die entsprechenden Sorptionsmittelpartien zu lenken. Die Verwendung eines metallischen Gewebes innerhalb der Zeolithfüllung kann die Stabilität erhöhen und gleichzeitig die Wärmeleitung im Sorptionsmittel selbst verbessern. Besonders vorteilhaft ist es, den Strömungskanal in axialer Richtung des Wellschlauches anzuordnen.

Innerhalb des Metall-Wellschlauches können auch - ebenfalls in axialer Richtung - Heiz- bzw. Kühlelemente eingebaut sein. Der Einbau einer Metallhülse zur Aufnahme einer elektrischen Heizpatrone ist beispielsweise dann vorteilhaft, wenn das Sorptionsmittel elektrisch beheizt werden soll, die Kühlung jedoch über die Oberfläche des Metall-Wellschlauches erfolgt.

Besonders vorteilhaft ist es auch, einen Metall-Wellschlauch in der Mitte um 180° zu biegen und die beiden Schlauchschenkel parallel zueinander anzuordnen. Auf diese Weise kann pro Wellschlauch eine aufwendige Verschlußkappe eingespart werden. Dies ist insbesondere dort vorteilhaft, wo der Sorptionsbehälter mit heißen Abgasen in Berührung kommt. Geschweißte oder gelötete Endkappen würden in diesem agressiven Medium einen besonders hohen Fertigungsaufwand erforderlich machen.

Eine besonders effektive Anwendung des Metall-Wellschlauches ergibt sich dann, wenn in einem Bereich des Schlauches keine Sorptionsmittelsfüllung vorhanden ist und dieser Bereich, anders als die mit Sorptionsstoff belegten Bereiche, außen mit einem Wärmeträger anderer Temperatur kontaktiert werden. Auf diese Weise läßt sich beispielsweise der sorptionsmittelfreie Bereich als Kondensator bzw. Verdampfer für das Arbeitsmittel einsetzen. Auch hier sind die Wellen des Schlauches für die Aufnahme des Arbeitsmittelkondensates besonders gut geeignet. Bei Schräglage oder Erschütterungen des Wellschlauches bleibt das verflüssigte Arbeitsmittel in der Welle und läuft nicht in flüssiger Form in die Sorptionsmittelfüllung.

Eine weitere, besonders vorteilhafte Anwendung des Metall-Wellschlauches ergibt sich dann, wenn der sorptionsmittelfreie Bereich eine Absperrvorrichtung enthält, die zu ihrer Betätigung die Verformung des Wellschlauches in axialer bzw. lateraler Richtung nutzt. Auf diese Weise entsteht eine leckagefreie Absperrvorrichtung, die sich äußerst kostengünstig fertigen läßt.

Ringwellschläuche werden in der Regel aus Glattrohren hergestellt. Wenn bei der Fertigung der Wellschläuche glatte Rohrstückenden bestehen bleiben, können diese beispielsweise im Außenbereich mit Lamellen versehen werden, die eine gute Wärmeübertragung, beispielsweise an einen Luftstrom erlauben. Das im Innenraum des Glattrohres verflüssigte Arbeitsmittel kann bei etwas geneigtem Rohr ablaufen und bleibt nicht, wie bei der Wellschlauchausführung in den Wellen stehen. Bei einer bündelförmigen Anordnung mehrerer Metall-Wellschläuche können alle glatten Rohrenden gemeinsam mit Lamellenblechen bestückt werden und durch Aufweiten der Rohrstücke, ähnlich wie dies bei der Fertigung von Rohrbündel-Lamellenwärmetauschern üblich ist, fixiert werden. Auf diese Weise läßt sich beispielsweise an einem Sorptionsbehälter gleich ein luftgekühlter Kondensator ohne zusätzliche Schweiß- oder Lötstellen gewichtssparend anbauen.

In der Zeichnung sind Teile der Erfindung näher erläutert.

Es zeigt:
- Fig. 1: einen Metall-Wellschlauch mit Wendelwellung,
- Fig. 2: einen Metall-Wellschlauch mit Ringwellung,
- Fig. 3: zwei geschnitten und gebrochen dargestellte Metall-Wellschläuche mit glatten Rohrenden und
- Fig. 4: einen sorptionsmittelfreien Wellschlauchbereich mit einer Absperrvorrichtung.

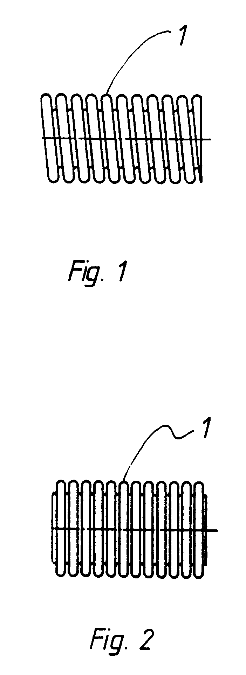

In Fig. 1 und Fig. 2 sind Metall-Wellschlauchstücke dargestellt. In beiden Fällen sind die lyraförmigen Wellen 1 so geformt, daß der Innenbereich der Wellen für die Aufnahme des Sorptionsmittels volumenmäßig größer ist als der Außenbereich über den ein entsprechendes Wärmeträgermedium, in der Regel Luft zur Wärmeübertragung an den Sorptionsbehälter geführt wird.

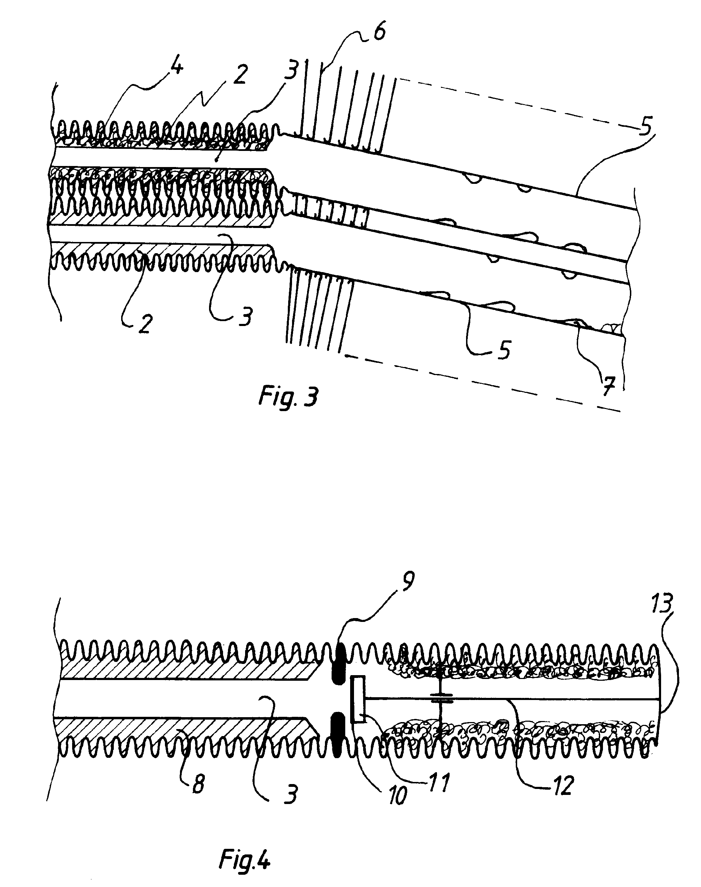

Die in Fig. 3 dargestellten Metall-Wellschläuche enthalten Zeolithfüllungen 2, in welche ein axial geführter Strömungskanal 3 für den Zutritt der Wasserdampfströmung eingearbeitet ist. Die Zeolithfüllung 2 im oberen Wellschlauch ist zusätzlich mit einem Metallgewirk 4 durchzogen. An einem Ende beider Wellschläuche sind die zur Herstellung verwandten Glattrohre nicht abgetrennt. Die mit einem Gefälle angelegten Glattrohrstücke 5 sind außen mit entsprechend gelochten Lamellenblechen 6 versehen und mit den Glattrohrenden 5 gut wärmeleitend verbunden worden. Hierzu sind die Glattrohrstücke 5 beispielsweise mittels eines Dornes, der in die Rohre eingeführt wird, soweit aufgeweitet worden, bis sich die Lamellenbleche 6 mechanisch mit den Glattrohren verpressen. Über die Lamellenbleche 6 wird beispielsweise Kühlluft geleitet, welche dazu führt, daß im Inneren der Glattrohrstücke 5 aus der Zeolithfüllung 2 desorbierter Wasserdampf kondensieren und bei Neigung der Rohrstücke 5 in einen nicht gezeichneten Kondensatsammelbehälter ablaufen kann.

Fig. 4 zeigt einen Metall-Wellschlauch in gebrochener und geschnittener Darstellung. Im linken Bereich ist ein festes Sorptionsmittel 8 enthalten, das wiederum von einem Strömungskanal 3 durchzogen ist. Der rechte Bereich des Wellschlauches ist sorptionsmittelfrei. In ihm befindet sich eine Absperrvorrichtung und flüssiges Arbeitsmittel. Die Absperrvorrichtung besteht aus einer Lochscheibe 9, welche in ihrem Außenbereich dampfdicht in eine Welle 1 des Wellschlauches eingearbeitet ist.

Die Lochscheibe 9 dient als Dichtsitz für einen mit einer Dichtung 10 versehenen Stempel 11, der über ein Gestänge 12 an der Endkappe 13 des Metall-Wellschlauches befestigt ist. Bei einer Bewegung des Metall-Wellschlauches in axialer Richtung kann die Absperreinrichtung mechanisch geöffnet bzw. geschlossen werden.

Bei Sorptionsapparaten mit Unterdruck wird bedingt durch die Flexibilität des Wellschlauches die Absperreinrichtung in der Ruhestellung geschlossen sein. Durch Einwirkung einer äußeren Kraft, die zur Dehnung des Metall-Wellschlauches zwischen der Lochblechscheibe 9 und der Endkappe 13 führt, kann die Absperreinrichtung geöffnet werden und das Arbeitsmittel verdampfen. Die durch diesen Verdampfungsprozeß entstehende Kälte kann über die größere Oberfläche des Wellschlauches besonders effizient übertragen werden. Der Wellschlauchbereich zwischen der Lochscheibe 9 und der Endkappe 13 ist zusätzlich mit einem saugfähigen Mittel ausgekleidet, welches das flüssige Arbeitsmittel gleichmäßig verteilt und zugleich als Tropfenabscheider für den abströmenden Arbeitsmitteldampf dient.

## Patentansprüche

1. Sorptionsbehälter für feste Sorptionsmittel, insbesondere Zeolith,
**dadurch gekennzeichnet,**
daß der Sorptionsbehälter einen flexiblen Metall-Wellschlauch enthält, dessen Wellen im Innenraum mit Sorptionsmittel (2) gefüllt sind.

2. Sorptionsbehälter nach Anspruch 1,
dadurch gekennzeichnet,
daß der Metall-Wellschlauch ein Ringwellschlauch ist.

3. Sorptionsbehälter nach Anspruch 1,
dadurch gekennzeichnet,
daß der Metall-Wellschlauch ein Wendelwellschlauch ist.

4. Sorptionsbehälter nach einem der vorhergehenden Ansprüche,
dadurch gekennzeichnet,
daß in der Sorptionsmittelfüllung (2) ein Strömungskanal (3) für den Arbeitsmitteldampf angeordnet ist, der überwiegend in axialer Richtung des Metall-Wellschlauches verläuft.

5. Sorptionsbehälter nach einem der vorhergehenden Ansprüche,
dadurch gekennzeichnet,
daß das Sorptionsmittel (2) von einem Metallgewebe (4) durchzogen ist.

6. Sorptionsbehälter nach einem der vorhergehenden Ansprüche,
dadurch gekennzeichnet,
daß der Metall-Wellschlauch im Innenraum eine Heizvorrichtung enthält.

7. Sorptionsbehälter nach einem der vorhergehenden Ansprüche,
dadurch gekennzeichnet,
daß der Metall-Wellschlauch haarnadelförmig gebogen ist.

8. Sorptionsbehälter nach einem der vorhergehenden Ansprüche,
dadurch gekennzeichnet,
daß mindestens ein Metall-Wellschlauchende einen Bereich aufweist, in welchem sich kein Sorptionsmittel befindet.

9. Sorptionsbehälter nach Anspruch 8,
dadurch gekennzeichnet,
daß der sorptionsmittelfreie Bereich die Funktion eines Kondensators bzw. Verdampfers für das Arbeitsmittel ausübt.

10. Sorptionsbehälter nach Anspruch 8,
dadurch gekennzeichnet,
daß der sorptionsmittelfreie Bereich eine Absperrvorrichtung aufweist, zu deren Betätigung der Metall-Wellschlauch in axialer oder lateraler Richtung verformt wird.

11. Sorptionsbehälter nach einem der vorhergehenden Ansprüche,
dadurch gekennzeichnet,
daß mehrere Metall-Wellschläuche zu einem Schlauchbündel angeordnet sind.

12. Sorptionsbehälter nach einem der vorhergehenden Ansprüche,
dadurch gekennzeichnet,
daß der Metall-Wellschlauch so angeordnet ist, daß er von einer Wärmeträgerströmung quer angeströmt wird.

13. Sorptionsbehälter nach einem der vorhergehenden Ansprüche,
dadurch gekennzeichnet,
daß mindestens ein Ende des Wellschlauches mit einem Glattrohrstück (5) verlängert ist.

14. Sorptionsapparat nach Anspruch 13,
dadurch gekennzeichnet,
daß das Glattrohrstück (5) im Außenbereich Mittel zur besseren Wärmeübertragung an ein Wärmeträgermedium aufweist.

## Claims

1. Adsorption container for solid adsorption media, in particular zeolite, characterised in that the adsorption container comprises a flexible metal corrugated tube the corrugations of which are filled with adsorption medium (2) in the interior.

2. Adsorption container according to claim 1, characterised in that the metal corrugated tube is a tube with annular corrugations.

3. Adsorption container according to claim 1, characterised in that the metal corrugated tube is a tube with helical corrugations.

4. Adsorption container according to one of the preceding claims, characterised in that a flow channel (3) for the working medium vapour is disposed in the adsorption medium filling (2) and mainly runs in the axial direction of the metal corrugated tube.

5. Adsorption container according to one of the preceding claims, characterised in that a metal fabric (4) runs through the adsorption medium (2).

6. Adsorption container according to one of the preceding claims, characterised in that the metal corrugated tube comprises a heating device in the interior.

7. Adsorption container according to one of the preceding claims, characterised in that the metal corrugated tube is bent in the shape of a hair pin.

8. Adsorption container according to one of the preceding claims, characterised in that at least one metal corrugated tube end exhibits an area in which no adsorption medium is present.

9. Adsorption container according to claim 8, characterised in that the area free of adsorption medium performs the function of a condenser or evaporator for the working medium.

10. Adsorption container according to claim 8, characterised in that the area free of adsorption medium exhibits a shut-off device which is actuated by distorting the metal corrugated tube in the axial or lateral direction.

11. Adsorption container according to one of the preceding claims, characterised in that a plurality of metal corrugated tubes are disposed in a tube bundle.

12. Adsorption container according to one of the preceding claims, characterised in that the metal corrugated tube is so disposed that a stream of heat-conveying medium flows across it.

13. Adsorption container according to one of the preceding claims, characterised in that at least one end of the corrugated tube is extended with a smooth tube section (5).

14. Adsorption apparatus according to claim 13, characterised in that externally the smooth tube section (5) exhibits means for improved heat transmission to a heat-conveying medium.

## Revendications

1. Récipient de sorption pour agents de sorption solides, notamment pour un zéolithe, caractérisé en ce que le récipient de sorption comporte un tube métallique ondulé flexible, dont les ondulations à l'intérieur sont remplies de l'agent de sorption (2).

2. Récipient de sorption selon la revendication 1, caractérisé en ce que le tube métallique ondulé est un tube ondulé en anneaux.

3. Récipient de sorption selon la revendication 1, caractérisé en ce que le tube métallique ondulé est un tube ondulé en spirale.

4. Récipient de sorption selon l'une des revendications précédentes, caractérisé en ce que dans le garnissage de l'agent de sorption (2) est disposé un canal d'écoulement (3) qui est destiné à la vapeur du fluide de travail et qui s'étend principalment dans la direction axiale du tube métallique ondulé.

5. Récipient de sorption selon l'une des revendications précédentes, caractérisé en ce que l'agent de sorption (2) est traversé par une toile métallique (4).

6. Récipient de sorption selon l'une des revendications précédentes, caractérisé en ce que l'intérieur du tube métallique ondulé contient un dispositif de chauffage.

7. Récipient de sorption selcn l'une des revendications précédentes, caractérisé en ce que le tube métallique ondulé est plié à la manière d'une épingle à cheveux.

8. Récipient de sorption selon l'une des revendications précédentes, caractérisé en ce qu'au moins une extrêmité du tube métallique ondulé présente une partie dans laquelle il n'y a pas d'agent de sorption.

9. Récipient de sorption selon la revendication 8, caractérisé en ce que la partie exempte d'agent de sorption exerce une fonction de condensateur ou d'évaporateur pour le fluide de travail.

10. Récipient de sorption selon la revendication 8, caractérisé en ce que la partie exempte d'agent de sorption comporte un dispositif d'arrêt, actionné par une déformation du tube métallique ondulé dans la direction axiale ou latérale.

11. Récipient de sorption selon l'une des revendications précédentes, caractérisé en ce que plusieurs tubes métalliques ondulés sont disposés en un faisceau de tubes.

12. Récipient de sorption selon l'une des revendications précédentes, caractérisé en ce que le tube métallique ondulé est disposé de telle manière qu'il y afflue transversalement du fluide caloporteur.

13. Récipient de sorption selon l'une des revendications précédentes, caractérisé en ce qu'au moins une extrêmité du tube ondulé est prolongée par un tronçon de tube lisse (5).

14. Récipient de sorption selon la revendication 13, caractérisé en ce que la partie extérieure du tronçon de tube lisse (5) comporte un moyen permettant de mieux céder de la chaleur à un fluide caloporteur.
